(19) Europäisches Patentamt
European Patent Office
Office européen des brevets

(11) **EP 4 307 514 A1**

(12) **EUROPEAN PATENT APPLICATION**
published in accordance with Art. 153(4) EPC

(43) Date of publication:
**17.01.2024 Bulletin 2024/03**

(21) Application number: **21953428.6**

(22) Date of filing: **29.12.2021**

(51) International Patent Classification (IPC):
*H02J 7/00* (2006.01)    *H01M 10/44* (2006.01)
*B60L 53/62* (2019.01)    *B60L 3/00* (2019.01)

(52) Cooperative Patent Classification (CPC):
Y02E 60/10; Y02T 10/70; Y02T 10/7072;
Y02T 90/12

(86) International application number:
**PCT/CN2021/142521**

(87) International publication number:
**WO 2023/015827 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2021 CN 202110928275**

(71) Applicant: **Shenzhen Winline Technology Co., Ltd
Shenzhen, Guangdong 518000 (CN)**

(72) Inventors:
• **ZONG, Chenglin
Shenzhen, Guangdong 518000 (CN)**

• **ZHANG, Kaixuan
Shenzhen, Guangdong 518000 (CN)**
• **ZHANG, Haidong
Shenzhen, Guangdong 518000 (CN)**
• **LI, Chenguang
Shenzhen, Guangdong 518000 (CN)**
• **FU, Jiayou
Shenzhen, Guangdong 518000 (CN)**
• **CHEN, Xiaoping
Shenzhen, Guangdong 518000 (CN)**
• **ZHU, Jianguo
Shenzhen, Guangdong 518000 (CN)**

(74) Representative: **Hamer, Christopher K. et al
Mathys & Squire
The Shard
32 London Bridge Street
London SE1 9SG (GB)**

(54) **CHARGING METHOD AND CHARGING APPARATUS**

(57)    A charging method and a charging apparatus are provided in embodiments of the disclosure. The charging method is applicable to the charging apparatus. The charging apparatus includes a control module and $P$ charging modules. The control module is configured to control $M$ charging modules in the $P$ charging modules to charge an electric vehicle, where $M$ is an integer greater than or equal to 2. The method includes the following. When the $M$ charging modules are in a charging stage, the $M$ charging modules establish a charging loop with the electric vehicle. When the $M$ charging modules require a voltage level switch, each of the $M$ charging modules performs the voltage level switch within one of $M$ time periods, where any two of the $M$ time periods have no intersection. Therefore, in the process of the voltage level switch of the charging module, abnormal charging can be avoided.

```
┌─────────────────────────────────────────────┐
│ WHEN M CHARGING MODULES ARE IN CHARGING      │ ⟋ 301
│ STAGE, M CHARGING MODULES ESTABLISH          │
│ CHARGING LOOP WITH ELECTRIC VEHICLE          │
└─────────────────────────────────────────────┘
                      │
                      ▼
┌─────────────────────────────────────────────┐
│ WHEN M CHARGING MODULES REQUIRE VOLTAGE      │ ⟋ 302
│ LEVEL SWITCH, EACH OF M CHARGING MODULES     │
│ PERFORMS VOLTAGE LEVEL SWITCH WITHIN ONE OF  │
│ M TIME PERIODS, WHERE ANY TWO OF M TIME      │
│ PERIODS HAVE NO INTERSECTION                 │
└─────────────────────────────────────────────┘
```

FIG. 3

**Description**

This application claims priority to Chinese Patent Application No. 202110928275.1, filed with the Chinese Patent Office on August, 13, 2021 and entitled "CHARGING METHOD AND CHARGING APPARATUS", the entire disclosure of which is hereby incorporated by reference.

TECHNICAL FIELD

This disclosure relates to the field of charging technology, and specifically to a charging method and a charging apparatus.

BACKGROUND

As the goals for "peak carbon dioxide emissions and carbon neutrality" are proposed, new-energy electric vehicles have dramatic booms, with an increase in a proportion of electrified vehicles such as passenger vehicles, buses, and automobile carriers. In order to achieve constant-power charging in an ultra-wide voltage range, a charging module requires to be designed to operate in a high-voltage level mode and in a low-voltage level mode. During charging, a switch is required between a high-voltage level and a low-voltage level, when a demand voltage spans the high-voltage level and the low-voltage level.

At present, in the process of the switch of the charging module between the high-voltage level and the low-voltage level, an output voltage and an output current have large fluctuations, thereby triggering current detection warning of an electric vehicle and leading to abnormal charging.

SUMMARY

A charging method and a charging apparatus are provided in embodiments of the disclosure, which can avoid abnormal charging in the process of a voltage level switch of a charging module.

A charging method is provided in a first aspect of embodiments of the disclosure. The charging method is applicable to a charging apparatus. The charging apparatus includes a control module and $P$ charging modules. The control module is configured to control $M$ charging modules in the $P$ charging modules to charge an electric vehicle, where $M$ is an integer greater than or equal to 2. The method includes the following. When the $M$ charging modules are in a charging stage, the $M$ charging modules establish a charging loop with the electric vehicle. When the $M$ charging modules require a voltage level switch, each of the $M$ charging modules performs the voltage level switch within one of $M$ time periods, where any two of the $M$ time periods have no intersection.

Optionally, each of the $M$ charging modules performs the voltage level switch within one of the $M$ time periods as follows. A master module in the $M$ charging modules performs the voltage level switch using a master module switch strategy. A slave module in the $M$ charging modules performs the voltage level switch using a slave module switch strategy.

Optionally, the master module is a module with the smallest address in the $M$ charging modules, and the slave module is a module except the master module in the $M$ charging modules.

Optionally, the master module in the $M$ charging modules performs the voltage level switch using the master module switch strategy as follows. When an actual output voltage of the master module is greater than or equal to a critical voltage, the master module performs the voltage level switch. The master module transmits level information of the master module to the slave module.

Optionally, the slave module in the $M$ charging modules performs the voltage level switch using the slave module switch strategy as follows. When the slave module is under control of a current loop, the slave module determines whether a level of the slave module is the same as a level of the master module. When the level of the slave module is different from the level of the master module, the slave module performs the voltage level switch upon elapse of a default duration, where the default duration and address size of the slave module have a positive correlation.

Optionally, the default duration is determined according to the following formula: $T = (N - Nmin) * \triangle t$. $T$ is the default duration, $N$ is an address of the slave module, Nmin is the smallest address in addresses of the $M$ charging modules, and $\triangle t$ is time required for one charging module from performing the voltage level switch to outputting a stable current.

Optionally, the method further includes the following. When the $M$ charging modules are in a power-up detection stage, the $M$ charging modules disconnect from the electric vehicle. When the $M$ charging modules require the voltage level switch, the $M$ charging modules perform the voltage level switch within a first duration.

Optionally, the $M$ charging modules perform the voltage level switch within the first duration as follows. When an actual output voltage of any one of the $M$ charging modules is greater than or equal to a critical voltage, the any one of the $M$ charging modules performs the voltage level switch within the first duration.

Optionally, the $M$ charging modules communicate with each other via a controller area network (CAN) bus.

A charging apparatus is provided in a second aspect of embodiments of the disclosure. The charging apparatus includes a control module and $P$ charging modules. The control module is configured to control $M$ charging modules in the $P$ charging modules to charge an electric vehicle, where $M$ is an integer greater than or equal to 2. The $M$ charging modules are configured to establish a charging loop with the electric vehicle when the $M$ charging modules are in a charging stage. The $M$ charging modules each are configured to perform a voltage level switch within one of $M$ time periods when the $M$ charging modules require the voltage level switch, where any two of the $M$ time periods have no intersection.

Optionally, a charging module includes a control chip, a double-loop competition circuit, a waveform generating circuit, and a voltage converter circuit.

In the charging method in embodiments of the disclosure, when the $M$ charging modules are in the charging stage, the $M$ charging modules establish the charging loop with the electric vehicle. When the $M$ charging modules require the voltage level switch, each of the $M$ charging modules performs the voltage level switch within one of the $M$ time periods, where any two of the $M$ time periods have no intersection. Since each of the $M$ charging modules performs the voltage level switch within one of the $M$ time periods, the $M$ charging modules cannot perform the voltage level switch simultaneously, which can avoid abnormal charging in the process of the voltage level switch of the charging module.

BRIEF DESCRIPTION OF THE DRAWINGS

In order for clarity in elaboration of technical solutions of embodiments of the disclosure or the related art, the following will give a brief introduction to the accompanying drawings used for describing the embodiments or the related art. Apparently, the accompanying drawings described below are merely some embodiments of the disclosure. Based on these drawings, those skilled in the art can also obtain other drawings without creative effort.

FIG. 1 is a schematic structural diagram illustrating a charging apparatus provided in embodiments of the disclosure.
FIG. 2 is a schematic structural diagram illustrating a charging module provided in embodiments of the disclosure.
FIG. 3 is a schematic flowchart illustrating a charging method provided in embodiments of the disclosure.
FIG. 4 is a schematic diagram illustrating an output current drop of a charging apparatus in which a charging module performs a simultaneous switch and an output current drop of a charging apparatus in which a charging module performs a time-phased switch, provided in embodiments of the disclosure.
FIG. 5 is a schematic flowchart illustrating another charging method provided in embodiments of the disclosure.

DETAILED DESCRIPTION

The terms "first", "second", and the like used in the specification, the claims, and the accompanying drawings of embodiments of the disclosure are used to distinguish different objects rather than describe a particular order. In addition, the terms "include", "comprise", and "have" as well as variations thereof are intended to cover non-exclusive inclusion. For example, a procedure, a system, a product, or a device that includes a series of steps or units is not necessarily limited to those steps or units listed, but optionally, may further include other steps or units that are not listed, or optionally, may further include other steps or units that are inherent to such a procedure, a product, or a device.

The "embodiment" or "implementation" referred to herein means that a particular feature, structure, or characteristic described in connection with the embodiment or implementation may be included in at least one embodiment of the disclosure. The phrase appearing in various places in the specification does necessarily refer to the same embodiment, nor does it refer to independent or alternative embodiments that are mutually exclusive to other embodiments. It is explicitly and implicitly understood by those skilled in the art that the embodiments described herein may be combined with other embodiments.

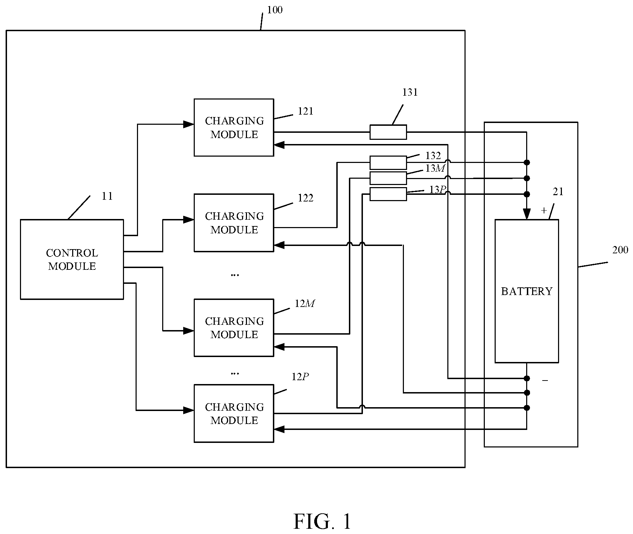

FIG. 1 is a schematic structural diagram illustrating a charging apparatus provided in embodiments of the disclosure. Referring to FIG. 1, the charging apparatus 100 may include a control module 11 and $P$ charging modules (121, 122, ..., and 12$P$). The control module is configured to control $M$ charging modules (121, 122, ..., and 12$M$) in the $P$ charging modules to charge an electric vehicle 200, where $M$ is an integer greater than or equal to 2, and $P$ is an integer greater than or equal to $M$. The $M$ charging modules are configured to establish a charging loop with the electric vehicle when the $M$ charging modules are in a charging stage. The $M$ charging modules each are configured to perform a voltage level switch within one of $M$ time periods when the $M$ charging modules require the voltage level switch, where any two of the $M$ time periods have no intersection.

In embodiments of the disclosure, the charging apparatus 100 may include multiple charging modules. Each charging module can supply the same output power, and the charging apparatus 100 can satisfy charging demand of the electric vehicle in different power ranges. For example, if output power of each charging module is 20 kilowatts (KW), and the charging apparatus 100 has a total of $P = 18$ charging modules, the whole charging apparatus 100 can supply 360 KW output power at most. The control module can select the $M$ charging modules from the $P$ charging modules to charge the electric vehicle. For example, if charging power required for the electric vehicle is 200 KW, the control module can select 10 charging modules from 18 charging modules to charge the electric vehicle. For another example, if the charging power required for the electric vehicle is 210 KW, the control module can select 11 charging modules from 18 charging modules to charge the electric vehicle.

Each charging module can be connected to a battery 21 of the electric vehicle via a contactor (131, 132, ..., and 13$P$ as illustrated in FIG. 1). The contactor may be a relay. Upon the voltage level switch, the relay cannot perform a switch operation until an output current of a charging module for each relay to switch is reduced to zero.

Upon detecting the charging demand of the electric vehicle, the charging apparatus can obtain the charging power for the electric vehicle, select the *M* charging modules according to the charging power for the electric vehicle, and power up the *M* charging modules. The control module can send a power-on command to the *M* charging modules, and then, the *M* charging modules power on and start to set an output voltage.

In embodiments of the disclosure, the charging apparatus may specifically be a charging pile.

In an embodiment, when the output voltage set is greater than or equal to a battery voltage of the electric vehicle, the charging module can be connected to the battery through controlling actuation of the contactor (e.g., the relay), causing the *M* charging modules to establish the charging loop with the electric vehicle.

In another embodiment, the charging apparatus needs to perform an insulation detection on the charging module, and in this case, the charging apparatus may further include an insulation detection module. When operating, the insulation detection module can send a voltage demand command to the control module, and in response to the voltage demand command, the control module adjusts an output voltage of the charging module to change within a certain range. When the insulation detection is performed, the charging module is required to output a higher voltage, so as to detect whether the charging module in the higher voltage is in an insulating state. The insulation detection generally occurs during power-up, that is, the insulation detection is performed in a power-up detection stage. Since the insulation detection requires the charging module to output a wide range of voltage, the charging module is also required to perform the voltage level switch in the process of the insulation detection. In order to complete the insulation detection during the power-up detection as quickly as possible, the *M* charging modules are required to quickly perform the voltage level switch, thereby improving a power-up response speed of the output voltage of the charging module. Upon completion of the insulation detection, the charging module can be connected to the battery through actuation of the contactor, when the output voltage of the charging modules has been adjusted to be about the same as a battery voltage of the electric vehicle, causing the *M* charging modules to establish the charging loop with the electric vehicle.

The control module may be a device having a control function. Specifically, the control module may be a processor.

When the *M* charging modules require the voltage level switch, each of the *M* charging modules can perform the voltage level switch within one of the *M* time periods.

The *M* charging modules require the voltage level switch when a rise is detected in battery voltage demand of the electric vehicle. A battery voltage may vary according to a battery level. For example, the battery voltage of the electric vehicle may also rise with a rise in the battery level of the electric vehicle. For example, when the battery level is 20%, the battery voltage is 400 volts (V). When the battery level is 60%, the battery voltage is 500 V When the battery level is 80%, the battery voltage is 600 V

In the charging apparatus in embodiments of the disclosure, when the *M* charging modules require the voltage level switch, each of the *M* charging modules performs the voltage level switch within one of the *M* time periods, and the *M* charging modules cannot perform the voltage level switch simultaneously, which can avoid abnormal charging in the process of the voltage level switch of the charging modules.

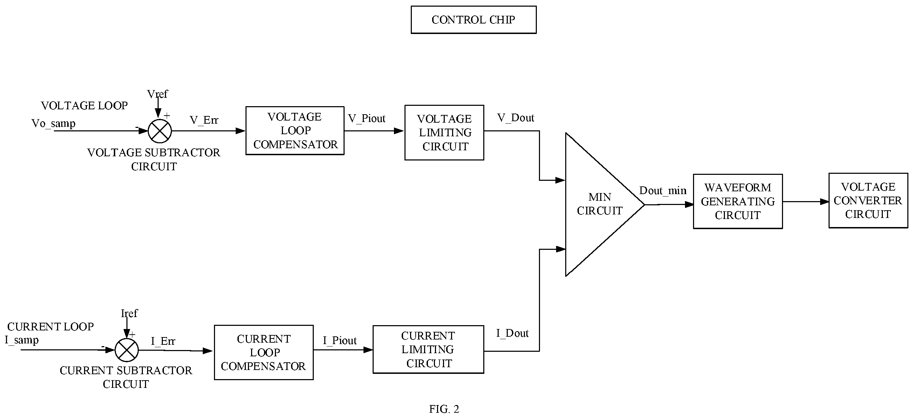

Optionally, FIG. 2 is a schematic structural diagram illustrating a charging module provided in embodiments of the disclosure. As illustrated in FIG. 2, the charging module includes a control chip, a double-loop competition circuit, a waveform generating circuit, and a voltage converter circuit. Each charging module in FIG. 1 may have the structure illustrated in FIG. 2.

The double-loop competition circuit may include a voltage loop, a current loop, and a minimum (MIN) circuit. The double-loop competition circuit is a digital circuit. The voltage loop may include a voltage subtractor circuit, a voltage loop compensator, and a voltage limiting circuit. The current loop may include a current subtractor circuit, a current loop compensator, and a current limiting circuit.

An output of the voltage subtractor circuit is $V\_Err = Vref - Vo\_samp$. The voltage loop compensator may be a proportional-integral (PI) compensator or a proportional-integral-derivative (PID) compensator, and an output of the voltage loop compensator is V_piout. An output of the voltage limiting circuit is V_Dout. An output of the current subtractor circuit is $I\_Err = Iref - I\_samp$. The current loop compensator may be the PI compensator or the PID compensator, and an output of the current loop compensator is I_piout. An output of the current limiting circuit is I_Dout. An output of the MIN circuit is Dout_min, where Dout_min is the minimum value of V_Dout and I_Dout. Dout_min can control a duty ratio of a waveform signal of the waveform generating circuit. The waveform generating circuit can control a duty ratio of a pulse width modulation (PWM) signal of a metal oxide semiconductor (MOS) tube, an insulated-gate bipolar transistor (IGBT), and other high-frequency devices in the voltage converter circuit, so as to control a magnitude of an output current of the voltage converter circuit and a magnitude of an output voltage of the voltage converter circuit, and to control a magnitude of output power of the charging module. The voltage converter circuit may include a transformer.

When a PWM is loaded, the duty ratio of the waveform signal is generally controlled in a certain range, for example, 1%~99%, and an output of the double-loop competition circuit requires to be in this range. If the output of the double-loop competition circuit is outside this range, PWM loading will fail. Therefore, the voltage limiting circuit and the current limiting circuit are required to perform a control, which can keep an input of the waveform generating circuit within a normal limit range.

The control chip can control a magnitude of a set value Vref of an output voltage and a magnitude of a set value Iref of an output current. Specifically, Vref can be controlled according to a demand voltage of the battery of the electric vehicle, and Iref can be controlled according to a demand current of the battery of the electric vehicle. The control chip may be a digital signal processing (DSP) chip.

When the charging module operates in a stable voltage loop, an output (V_Dout) of the voltage loop is less than an output (I_Dout) of the current loop, that is, a sampled value Vo_samp of the output voltage is basically equal to the set value Vref of the output voltage; a sampled value I_samp of the output current is less than the set value Iref of the output current; and an operating state of the voltage loop is generally in an insulation detection state of the electric vehicle and in a power-on output voltage rise stage of the electric vehicle. In this operating state, the output voltage is required to have a fast response speed, which can immediately respond to a voltage demand command of the control module. Therefore, high-voltage and low-voltage level requires to be switched quickly.

When the charging module operates in a stable current loop, the output of the current loop is less than the output of the voltage loop, that is, the sampled value I_samp of the output current is basically equal to the set value Iref of the output current; the sampled value Vo_samp of the output voltage is less than the set value Vref of the output voltage; and an operating state of the current loop is generally in the process of charging the electric vehicle. During charging, the output voltage of the charging module rises slowly, and an output voltage of the charging modules is equal to an actual battery voltage. In order to ensure safety and reliability of charging, a fluctuation of the output current requires to be minimized. Therefore, in the current loop, all power-on $M$ charging modules can be controlled to perform a level switch in sequence, so as to reduce the fluctuation of the output current resulting from the voltage level switch of the charging module.

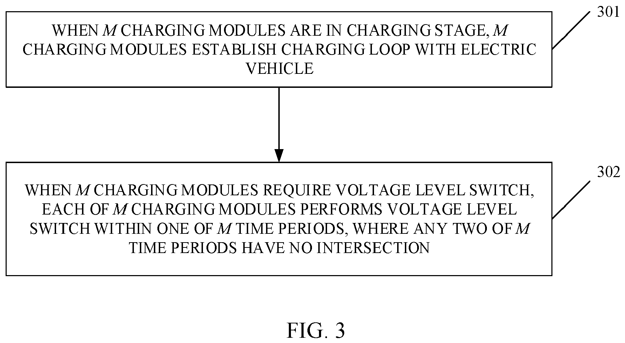

FIG. 3 is a schematic flowchart illustrating a charging method provided in embodiments of the disclosure. The method illustrated in FIG. 3 is applicable to the charging apparatus illustrated in FIG. 1. As illustrated in FIG. 3, the method may include the following operations.

At 301, when $M$ charging modules are in a charging stage, the $M$ charging modules establish a charging loop with an electric vehicle.

At 302, when *the M* charging modules require a voltage level switch, each of *the M* charging modules performs the voltage level switch within one of $M$ time periods, where any two of the $M$ time periods have no intersection.

In embodiments of the disclosure, regarding switch between a high-voltage level and a low-voltage level, a charging module is generally designed to perform a two-way series/parallel switch or a main transformer winding switch. The most efficient implementation of the two switch schemes is to use a relay switch scheme. A relay switch requires to ensure that a current has been reduced to zero upon a switch and that high-frequency over-current capability of a relay meets design requirements. If the two requirements of the relay switch are met, the charging module can implement an efficient and reliable voltage level switch.

When the relay switch scheme is adopted, there is a delay in operation time of the relay, and a zero-current switch needs to be guaranteed (i.e., when the relay performs a switch operation, an output current of the charging module is 0). Therefore, in the process of a switch of the charging module, the output current may drop for a certain duration (e.g., tens of milliseconds). When the $M$ charging modules perform the switch simultaneously, a total output current has a current drop to 0. This large drop leads to a higher probability of an abnormal charging current being checked during internal checking for the electric vehicle, thereby causing charging failure.

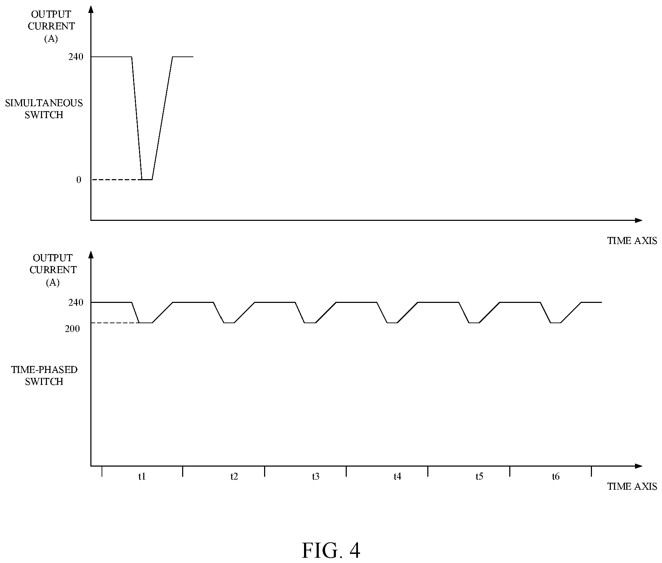

Exemplarily, $M$ = 6, and an output current of each charging module is 40 amperes (A) prior to the voltage level switch. FIG. 4 is a schematic diagram illustrating an output current drop of a charging apparatus in which a charging module performs a simultaneous switch and an output current drop of a charging apparatus in which a charging module performs a time-phased switch, provided in embodiments of the disclosure. As illustrated in FIG. 4, the abscissa represents time, and the ordinate represents an output current of the charging apparatus. When 6 charging modules require the voltage level switch, the output current of each charging module is 40 A prior to the voltage level switch, and the output current of the charging apparatus is 6 * 40 A = 240 A prior to the voltage level switch. If an existing technical solution is adopted, in which 6 charging modules perform the voltage level switch simultaneously, the output current drop of the charging apparatus is from 240 A to 0 A. When the time-phased switch in this disclosure is adopted, in which each of the 6 charging modules performs the voltage level switch within one of 6 time periods (6 time periods in total, including t1, t2, t3, t4, t5, and t6 as illustrated in FIG. 4), the output current drop can be divided into 6 times, each time from 240 A to 200 A, which is 1/6 of the previous output current drop in size. Therefore, a fluctuation of an output current can be reduced significantly. This minor current drop will not cause the abnormal charging current to be checked inside the electric vehicle and will also not lead to the charging failure.

Each of the $M$ charging modules performs the voltage level switch within one of the $M$ time periods. Since the $M$ time periods have no intersection, any two of the $M$ charging modules cannot perform the switch simultaneously, significantly reducing the fluctuation of the output current. This minor current fluctuation causes the abnormal charging current not to be checked inside the electric vehicle and also does not lead to the charging failure.

In the charging method in embodiments of the disclosure, when the $M$ charging modules are in the charging stage, the $M$ charging modules establish the charging loop with the electric vehicle. When the $M$ charging modules require the voltage level switch, each of the $M$ charging modules performs the voltage level switch within one of the $M$ time periods, where any two of the $M$ time periods have no intersection. Since each of the $M$ charging modules performs the voltage level switch within one of the $M$ time periods, the $M$ charging modules cannot perform the voltage level switch simultaneously, which can avoid abnormal charging in the process of the voltage level switch of the charging module.

Optionally, each of the $M$ charging modules performs the voltage level switch within one of the $M$ time periods as follows. A master module in the $M$ charging modules performs the voltage level switch using a master module switch strategy. A slave module in the $M$ charging modules performs the voltage level switch using a slave module switch strategy.

In embodiments of the disclosure, one of the $M$ charging modules is the master module, and the other module(s) is the slave module. The master module and the slave module in the $M$ charging modules can be determined according to a certain method. For example, a module with the smallest address in the $M$ charging modules can be determined as the master module, and the other module(s) is the slave module. For another example, a module with the largest address in the $M$ charging modules can be determined as the master module, and the other module(s) is the slave module.

An address of the charging module may be automatically assigned by a control module upon power-up, or may be a manually-set address. Addresses of any two of the $M$ charging modules are different. For example, addresses of the $M$ charging modules are 1, 2, ..., and $M$ respectively.

The charging modules can communicate with each other via a controller area network (CAN) bus. The control module can also communicate with $P$ charging modules via the CAN bus.

The master module performs the voltage level switch using the master module switch strategy, and the slave module performs the voltage level switch using the slave module switch strategy. The master module switch strategy is different from the slave module switch strategy.

Optionally, the master module in the $M$ charging modules performs the voltage level switch using the master module switch strategy as follows. When an actual output voltage of the master module is greater than or equal to a critical voltage, the master module performs the voltage level switch. The master module transmits level information of the master module to the slave module.

In embodiments of the disclosure, upon the switch of the master module, regardless of whether the master module operates in a voltage loop or in a current loop, when a current level of the master module is the low-voltage level, the master module performs the voltage level switch from the low-voltage level to the high-voltage level, as long as the actual output voltage of the master module is detected to be greater than a maximum output voltage of the current level, i.e., the critical voltage. When the current level of the master module is the high-voltage level, the master module performs the voltage level switch from the high-voltage level to the low-voltage level, as long as the actual output voltage of the master module is detected to be less than a minimum output voltage of the current level, i.e., the critical voltage.

The critical voltage is a voltage at a critical point between the high-voltage level and the low-voltage level. For example, if an output voltage in the low-voltage level ranges from 300 V to 500 V, and an output voltage in the high-voltage level ranges from 500 V to 1000 V, the critical voltage is 500 V

After the switch of the master module, the master module transmits the level information of the master module to the slave module. Specifically, the master module can transmit the level information of the master module to other slave modules via the CAN bus, after performing the voltage level switch.

The charging module may operate at two different voltage levels: a first voltage level and a second voltage level. The first voltage level is the low-voltage level, and the second voltage level is the high-voltage level.

In a possible embodiment, the charging module may switch between 2 or more voltage levels.

In embodiments of the disclosure, a level switch may be a switch of a turns ratio of a transformer of the charging module. The logic of the level switch mainly depends on the turns ratio of the transformer. Assuming that a turns ratio of an input to an output of the transformer is 2:1 and that the input is 1000 V, a maximum output capacity is 500 V In this case, if a 1000 V output is required, the turns ratio requires to be switched from 2:1 to 2:2, and then the output can be allowed to reach 1000 V after the switch. In addition, an output voltage of the low-voltage level is below 500 V, and an output voltage of the high-voltage level ranges from 500 V to 1000 V If the high-voltage level and the low-voltage level are not set, if the charging module merely has one level, and if a wide voltage output is to be implemented, a primary-side current of the transformer is difficult to meet the design requirements, since the charging module has a constant-power output. For example, if the charging module merely has one level, an output voltage of 0 V to 1000 V is to be implemented, since the output current is also related to the turns ratio. Assuming that the turns ratio of the input to the output is 2:1, a maximum output current is 80 A, and a maximum input current is merely 40 A. A maximum primary-side current capacity of the transformer is fixed, a transistor, such as an MOS tube and a triode has a maximum allowable current due to heat dissipation, and therefore, when the turns ratio is 2:1, the maximum output current can reach 80 A, and when the turns ratio is 1:1, the maximum output current is 40 A. Through the switch of the turns ratio, the charging module has a wider voltage range and a wider current range under constant-power.

The following will give an explanation of the constant-power. Assuming that a 20 KW charging module requires an output of 20 KW under 300 V to 1000 V When the output voltage is 1000 V, the output current is merely 20 A. When the output voltage is 300 V, the output current requires an output of 67 A. In a case where a maximum primary-side input current of the transformer is 40 A and a maximum primary-side input voltage of the transformer is 1000 V, the output voltage can reach 500 V at most, if the turns ratio is not switched and remains 2:1. Therefore, when the output voltage exceeds 500 V, the turns ratio requires to be switched from 2:1 to 1:1, so as to extend the output voltage.

The level switch is completed through the switch of the turns ratio of the transformer. When a voltage is switched, in fact, a current is also switched. In the low-voltage level, an output voltage capacity is limited, but an output current capacity is high. In the high-voltage level, the output voltage is higher, but the output current capacity is limited.

For example, the critical voltage of switch is 500 V In the high-voltage level (500 V to 1000 V), a maximum output current capacity is 40 A, and the turns ratio of the input to the output of the transformer is 1:1. In the low-voltage level (300 V to 500 V), the maximum output current capacity is 67 A, and the turns ratio of the input to the output of the transformer is 2: 1. At the beginning of charging a battery of the electric vehicle, a battery voltage rises from a low voltage (such as 300V) due to a relatively low battery voltage. In this case, the low-voltage level is preferable and can satisfy requirements of a rising battery voltage. When the battery voltage reaches 500 V, a switch to the high-voltage level is required, since the output voltage capacity in the low-voltage level is insufficient. Upon the switch to the high-voltage level, the high-voltage level can also satisfy the requirements, since an output current of 500 V merely requires 40 A.

Optionally, the slave module in the M charging modules performs the voltage level switch using the slave module switch strategy as follows. When the slave module is under control of the current loop, the slave module determines whether a level of the slave module is the same as a level of the master module. When the level of the slave module is different from the level of the master module, the slave module performs the voltage level switch upon elapse of a default duration, where the default duration and address size of the slave module have a positive correlation. When the level of the slave module is the same as the level of the master module, the slave module continues to determine whether the slave module is in the current loop.

In embodiments of the disclosure, before determining whether the level of the slave module is the same as the level of the master module, the slave module may further perform the following operations. The slave module determines whether the slave module is under control of the current loop.

Upon reception of the level information transmitted from the master module, the slave module can determine whether the level of the slave module is the same as the level of the master module.

The default duration can be implemented via a timer. The slave module performs the voltage level switch upon elapse of the default duration. Specifically, the timer can start upon determination that the level of the slave module is different from the level of the master module. When a timing duration reaches the default duration, the slave module performs the voltage level switch.

The default duration and the address size of the slave module have a positive correlation. Since the master module is the module with the smallest address, each of the $M$ charging modules performs the switch in the order of smallest to largest according to the address size.

Optionally, the default duration is determined according to the following formula: $T = (N - N_{min}) * \Delta t$. $T$ is the default duration, $N$ is an address of the slave module, $N_{min}$ is the smallest address in the addresses of the $M$ charging modules, and $\Delta t$ is time required for one charging module from performing the voltage level switch to outputting a stable current.

In embodiments of the disclosure, the addresses of the $M$ charging modules are $N_{min}$, $N_{min}+1$, $N_{min}+2$, ..., $N_{min}+M-1$ respectively. For example, if $N_{min} = 1$, the addresses of the $M$ charging modules are 1, 2, ... , and $N$ respectively. $N_{min}$ is the smallest address in the addresses of the $M$ charging modules and is an address of the master module.

Since time required for each charging module from performing the voltage level switch to outputting the stable current is similar, $\Delta t$ can be preset. $\Delta t$ may be an average value of the time required for each charging module from performing the voltage level switch to outputting the stable current, may be a maximum value of the time required for each charging module from performing the voltage level switch to outputting the stable current, or may also be a minimum value of the time required for each charging module from performing the voltage level switch to outputting the stable current.

When the charging module performs the voltage level switch, the charging module is in the charging stage if the charging module operates in the voltage loop. When the charging module charges the battery of the electric vehicle (when the charging module is in the charging stage), the charging module is under control of the current loop. For example, the battery voltage requires to be charged from 490 V to 510 V, in which the voltage changes very slowly. When the voltage just reaches 500 V, the master module can perform the voltage level switch. If other slave modules perform the voltage level switch with the master module simultaneously, the current drop will be significant due to a process of dropping from a maximum current directly to 0 and then rising again, leading to a large current fluctuation. Therefore, the current drop will be detected in the electric vehicle, abnormal charging will be declared for the electric vehicle, and charging will pause. If the slave modules perform the voltage level switch in sequence after the master module performs the voltage level switch, a current fluctuation can be minimized.

Optionally, the method illustrated in FIG. 3 may further include the following. When *the M* charging modules are in a power-up detection stage, *the M* charging modules disconnect from the electric vehicle. When the *M* charging modules require the voltage level switch, the *M* charging modules perform the voltage level switch within a first duration.

In embodiments of the disclosure, in the power-up detection stage, the *M* charging modules disconnect from the electric vehicle. In this case, upon performing the voltage level switch, the charging module operates in the voltage loop, the charging module is actually not connected to a battery load, and the charging module has no output current. In this case, the output voltage requires to be set as quickly as possible. Within the first duration, the *M* charging modules all perform the voltage level switch. Therefore, if output voltages of the *M* charging modules are set as quickly as possible, a power-up response speed can be improved.

The first duration may be preset, and may be time required for one charging module to perform one voltage level switch. The first duration may be an average value of or a maximum value of time required for the *M* charging modules to perform a voltage level switch to outputting a stable current.

The *M* charging modules may require the voltage level switch in the following case. First, the *M* charging modules require the voltage level switch in the process of performing an insulation detection during power-up; and second, the *M* charging modules require the voltage level switch in the process of a rise of the output voltages of the *M* charging modules from 0 to a demand voltage of an electric battery (the demand voltage is greater than the critical voltage) during power-up.

Regarding the first case above, exemplarily, in the process of power-up of the *M* charging modules, if the insulation detection requires a voltage ranging from 300 V to 1000 V, since a voltage range of the insulation detection spans two voltage levels: the low-voltage level (300 V to 500 V) and the high-voltage level (500 V to 1000 V), the charging module performs the switch from the low-voltage level to the high-voltage level when a demand voltage of the insulation detection rises from less than 500 V to greater than 500 V; and the charging module performs the switch from the high-voltage level to the low-voltage level when the demand voltage of the insulation detection drops from greater than 500 V to less than 500 V

Regarding the second case above, exemplarily, if the output voltage requires 800 V and the battery voltage requires 750 V, the charging module may be in the low-voltage level (300 V to 500 V). In the process of a rise of an output voltage of the charging module from 0 V to 750 V, the master module and the slave module can perform the voltage level switch simultaneously when the voltage reaches 500 V, since there is no output current in this case and the current fluctuation does not occur.

Optionally, the *M* charging modules perform the voltage level switch within the first duration as follows. When an actual output voltage of any one of the *M* charging modules is greater than or equal to the critical voltage, the any one of the *M* charging modules performs the voltage level switch within the first duration.

In embodiments of the disclosure, the critical voltage is the voltage at the critical point between the high-voltage level and the low-voltage level. For example, if the output voltage in the low-voltage level ranges from 300 V to 500 V, and the output voltage in the high-voltage level ranges from 500 V to 1000 V, the critical voltage is 500 V

As an example, the any one of the *M* charging modules may be a first charging module. When the first charging module is currently in the low-voltage level, and an actual output voltage of the first charging module is greater than or equal to the critical voltage, the first charging module performs the voltage level switch from the low-voltage level to the high-voltage level within the first duration. When the first charging module is currently in the high-voltage level, and the actual output voltage of the first charging module is less than or equal to the critical voltage, the first charging module performs the voltage level switch from the high-voltage level to the low-voltage level within the first duration.

The *M* charging modules can complete the voltage level switch within the first duration, or can perform the voltage level switch simultaneously, which can achieve a fast voltage response of the *M* charging modules in a power-up detection stage.

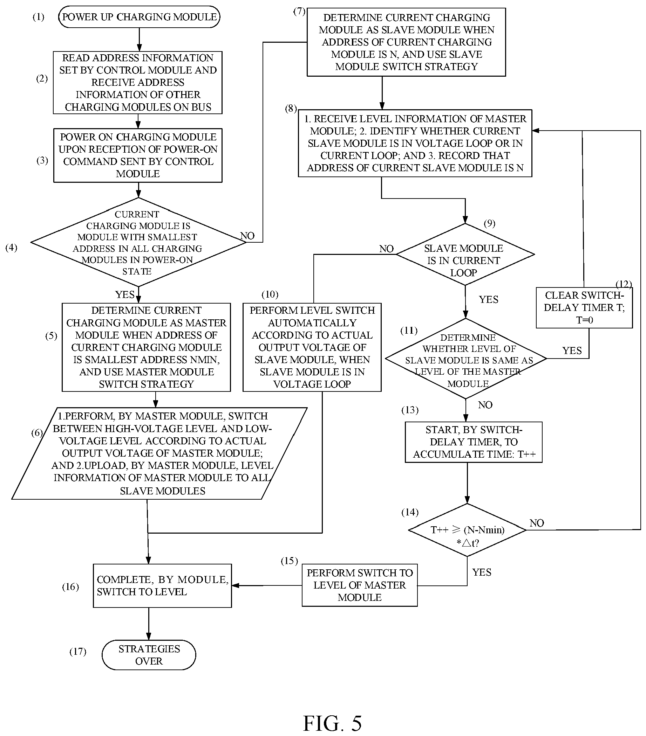

FIG. 5 is a schematic flowchart illustrating another charging method provided in embodiments of the disclosure. The method illustrated in FIG. 5 is applicable to the charging apparatus illustrated in FIG. 1. As illustrated in FIG. 5, the method may include the following operations.

(1). Power up a charging module; an internal auxiliary source of the charging module starts to operate; and establish communication between the charging module and a control module and between charging modules.

(2). Read address information set by the control module and receive address information of other charging modules on a bus (e.g., a CAN bus).

(3). Power on the charging module upon reception of a power-on command sent by the control module. In this case, an output voltage and an output current of the charging module are established.

(4). Determine whether a current charging module is a module with the smallest address in all charging modules in a power-on state. The current charging module may receive address information of all the charging modules that have been powered on via the CAN bus.

(5). Determine the current charging module as a master module when an address of the current charging module is the smallest address Nmin, and use a master module switch strategy.

(6). The master module switch strategy: 1. perform, by the master module, a switch between a high-voltage level and a low-voltage level according to an actual output voltage of the master module; and 2. upload, by the master module, level information of the master module to all slave modules in real time via a communication bus.

(7). Determine the current charging module as a slave module when an address of the current charging module N is not the smallest address, and use a slave module switch strategy.

(8). The slave module switch strategy: 1. receive the level information of the master module; 2. identify whether the current slave module is in a voltage loop or in a current loop; and 3. record that an address of the current slave module is N.

(9). Identify whether the slave module is in the current loop.

(10). Perform a level switch automatically according to an actual output voltage of the slave module, when the slave module is in the voltage loop.

(11). Determine whether a level of the slave module is the same as a level of the master module, when the slave module is in the current loop.

(12). Clear (reset to zero) a switch-delay timer T when the level of the slave module is the same as the level of the master module and continue to receive the level information of the master module.

(13). Start, by the switch-delay timer, to accumulate time, i.e., T++, when the level of the slave module is different from the level of the master module.

(14). Determine whether T++ is greater than address difference delay-setting value (N - Nmin) * Δt, and continue to wait when T++ is less than the address difference delay-setting value.

(15). Perform, by the slave module, a switch to a level of an output voltage of the master module, when T++ is greater than the address difference delay-setting value.

(16). Complete the switch to the level of the output voltage.

(17). Strategies over.

A method for voltage level switch in a master/slave switch mode is provided in embodiments of the disclosure. Upon identification of the switch through the master module, the slave modules perform, according to the address information, the switch in sequence after a fixed delay, which can ensure that only one of charging modules performs the voltage level switch at a time. Therefore, a fluctuation in a charging current caused by the switch can be minimized, and an impact of the voltage level switch of the charging module can be minimized. A switch strategy in embodiments of the disclosure may be implemented by a DSP chip.

In the embodiments above, the description of each embodiment has its own emphasis. For the parts not described in detail in one embodiment, reference may be made to related descriptions in other embodiments.

In several embodiments provided in the disclosure, it will be appreciated that the apparatuses disclosed may be implemented in other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped.

**Claims**

1. A charging method, applicable to a charging apparatus, the charging apparatus comprising a control module and *P* charging modules, the control module being configured to control *M* charging modules in the *P* charging modules to charge an electric vehicle, and *M* being an integer greater than or equal to 2, the method comprising:

   establishing, by the *M* charging modules, a charging loop with the electric vehicle, when the *M* charging modules are in a charging stage; and performing, by each of the *M* charging modules, a voltage level switch within one of *M* time periods, when the *M* charging modules require the voltage level switch, wherein any two of the *M* time periods have no intersection.

2. The method of claim 1, wherein performing, by each of the *M* charging modules, the voltage level switch within one of the *M* time periods comprises:

   performing, by a master module in the *M* charging modules, the voltage level switch using a master module switch strategy; and performing, by a slave module in the *M* charging modules, the voltage level switch using a slave module switch strategy.

3. The method of claim 2, wherein the master module is a module with the smallest address in the *M* charging modules, and the slave module is a module except the master module in the *M* charging modules.

4. The method of claim 2 or claim 3, wherein performing, by the master module in the *M* charging modules, the voltage level switch using the master module switch strategy comprises:

performing, by the master module, the voltage level switch, when an actual output voltage of the master module is greater than or equal to a critical voltage; and
transmitting, by the master module, level information of the master module to the slave module.

5. The method of claim 4, wherein performing, by the slave module in the *M* charging modules, the voltage level switch using the slave module switch strategy comprises:

determining, by the slave module, whether a level of the slave module is the same as a level of the master module, when the slave module is under control of a current loop; and
performing, by the slave module, the voltage level switch upon elapse of a default duration, when the level of the slave module is different from the level of the master module, wherein the default duration and address size of the slave module have a positive correlation.

6. The method of claim 5, wherein the default duration is determined according to the following formula:

$$T = (N - Nmin) * \triangle t,$$

wherein
T is the default duration, N is an address of the slave module, Nmin is the smallest address in addresses of the *M* charging modules, and $\triangle t$ is time required for one charging module from performing the voltage level switch to outputting stable current.

7. The method of claim 1, further comprising:

disconnecting, by the *M* charging modules, from the electric vehicle, when the *M* charging modules are in a power-up detection stage; and
performing, by the *M* charging modules, the voltage level switch within a first duration, when the *M* charging modules require the voltage level switch.

8. The method of claim 7, wherein performing, by the *M* charging modules, the voltage level switch within the first duration comprises:

performing, by any one of the *M* charging modules, the voltage level switch within the first duration, when an actual output voltage of the any one of the *M* charging modules is greater than or equal to a critical voltage.

9. A charging apparatus, comprising a control module and *P* charging modules, wherein the control module is configured to control *M* charging modules in the *P* charging modules to charge an electric vehicle, and *M* is an integer greater than or equal to 2;

the *M* charging modules are configured to establish a charging loop with the electric vehicle, when the *M* charging modules are in a charging stage; and
the *M* charging modules each are configured to perform a voltage level switch within one of *M* time periods, when the *M* charging modules require the voltage level switch, wherein any two of the *M* time periods have no intersection.

10. The charging apparatus of claim 9, wherein a charging module comprises a control chip, a double-loop competition circuit, a waveform generating circuit, and a voltage converter circuit.

FIG. 1

FIG. 2

WHEN *M* CHARGING MODULES ARE IN CHARGING STAGE, *M* CHARGING MODULES ESTABLISH CHARGING LOOP WITH ELECTRIC VEHICLE — 301

WHEN *M* CHARGING MODULES REQUIRE VOLTAGE LEVEL SWITCH, EACH OF *M* CHARGING MODULES PERFORMS VOLTAGE LEVEL SWITCH WITHIN ONE OF *M* TIME PERIODS, WHERE ANY TWO OF *M* TIME PERIODS HAVE NO INTERSECTION — 302

FIG. 3

FIG. 4

(1) ( POWER UP CHARGING MODULE )

(2) READ ADDRESS INFORMATION SET BY CONTROL MODULE AND RECEIVE ADDRESS INFORMATION OF OTHER CHARGING MODULES ON BUS

(3) POWER ON CHARGING MODULE UPON RECEPTION OF POWER-ON COMMAND SENT BY CONTROL MODULE

(4) CURRENT CHARGING MODULE IS MODULE WITH SMALLEST ADDRESS IN ALL CHARGING MODULES IN POWER-ON STATE — NO

YES

(5) DETERMINE CURRENT CHARGING MODULE AS MASTER MODULE WHEN ADDRESS OF CURRENT CHARGING MODULE IS SMALLEST ADDRESS NMIN, AND USE MASTER MODULE SWITCH STRATEGY

(6) 1.PERFORM, BY MASTER MODULE, SWITCH BETWEEN HIGH-VOLTAGE LEVEL AND LOW-VOLTAGE LEVEL ACCORDING TO ACTUAL OUTPUT VOLTAGE OF MASTER MODULE; AND 2.UPLOAD, BY MASTER MODULE, LEVEL INFORMATION OF MASTER MODULE TO ALL SLAVE MODULES

(7) DETERMINE CURRENT CHARGING MODULE AS SLAVE MODULE WHEN ADDRESS OF CURRENT CHARGING MODULE IS N, AND USE SLAVE MODULE SWITCH STRATEGY

(8) 1. RECEIVE LEVEL INFORMATION OF MASTER MODULE; 2. IDENTIFY WHETHER CURRENT SLAVE MODULE IS IN VOLTAGE LOOP OR IN CURRENT LOOP; AND 3. RECORD THAT ADDRESS OF CURRENT SLAVE MODULE IS N

(9) SLAVE MODULE IS IN CURRENT LOOP — NO

YES

(10) PERFORM LEVEL SWITCH AUTOMATICALLY ACCORDING TO ACTUAL OUTPUT VOLTAGE OF SLAVE MODULE, WHEN SLAVE MODULE IS IN VOLTAGE LOOP

(11) DETERMINE WHETHER LEVEL OF SLAVE MODULE IS SAME AS LEVEL OF THE MASTER MODULE — YES

NO

(12) CLEAR SWITCH-DELAY TIMER T; T=0

(13) START, BY SWITCH-DELAY TIMER, TO ACCUMULATE TIME: T++

(14) T++ ≥ (N-Nmin) *△t? — NO

YES

(15) PERFORM SWITCH TO LEVEL OF MASTER MODULE

(16) COMPLETE, BY MODULE, SWITCH TO LEVEL

(17) ( STRATEGIES OVER )

FIG. 5

## INTERNATIONAL SEARCH REPORT

| International application No. |
|---|
| **PCT/CN2021/142521** |

| **A.** | **CLASSIFICATION OF SUBJECT MATTER** |
|---|---|

H02J 7/00(2006.01)i; H01M 10/44(2006.01)i; B60L 53/62(2019.01)i; B60L 3/00(2019.01)i

According to International Patent Classification (IPC) or to both national classification and IPC

| **B.** | **FIELDS SEARCHED** |
|---|---|

Minimum documentation searched (classification system followed by classification symbols)

H02J; H01M; B60L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 车, 充电, 功率, 档位, 电压, 高, 低, 切换, 转换, 变换, 改变, 转变, 顺序, 依序, 顺次, 顺次, 逐个, 同时, 时间, 主, 从, 绝缘, 宽电压, 电流, 跌坑, 多个, 复数, 若干, 变压器, 变比, 匝, 整流, 上电, 开机, dc, vehicle, charge, power, voltage, high, low, shift, position, switch, sequence, simultaneous, meantime, time, master, slave, insulation, multiple, complex, several, transformer, ratio, rectifier

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 113381488 A (SHENZHEN WINLINE TECHNOLOGY CO., LTD.) 10 September 2021 (2021-09-10) claims 1-10 | 1-10 |
| A | CN 108879900 A (GUANGDONG POWER GRID COMPANY et al.) 23 November 2018 (2018-11-23) description, paragraphs [0037]-[0101], and figures 1-4 | 1-10 |
| A | CN 112713779 A (HANGZHOU ZHONGHENG ELECTRIC CO., LTD.) 27 April 2021 (2021-04-27) entire document | 1-10 |
| A | CN 206195615 U (SHENZHEN LINKCON TECHNOLOGY CO., LTD.) 24 May 2017 (2017-05-24) entire document | 1-10 |
| A | US 2019148973 A1 (EJINS CO., LTD.) 16 May 2019 (2019-05-16) entire document | 1-10 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 February 2022** | **02 March 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/142521**

| Patent document cited in search report | | | Publication date (day/month/year) | Patent family member(s) | | | Publication date (day/month/year) |
|---|---|---|---|---|---|---|---|
| CN | 113381488 | A | 10 September 2021 | CN | 113381488 | B | 29 October 2021 |
| CN | 108879900 | A | 23 November 2018 | | None | | |
| CN | 112713779 | A | 27 April 2021 | | None | | |
| CN | 206195615 | U | 24 May 2017 | | None | | |
| US | 2019148973 | A1 | 16 May 2019 | KR | 20190054390 | A | 22 May 2019 |
| | | | | KR | 102022705 | B1 | 18 September 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110928275